# EUROPÄISCHE PATENTANMELDUNG

(11) **EP 1 777 622 A2**
(43) Veröffentlichungstag der Anmeldung: **25.04.2007**
(21) Anmeldenummer: 06122392.1
(22) Anmeldetag: 17.10.2006
(51) Int. Cl.: G06F 11/10

(54) **Instruktionsspeicherabsicherung durch Control Flow Checking**

(30) Priorität: 24.10.2005 DE 102005050767
(71) Anmelder: ROBERT BOSCH GMBH, 70442 Stuttgart (DE)
(72) Erfinder: Mueller, Bernd, 70839, Gerlingen (DE); Kottke, Thomas, 71139, Ehningen (DE); Wendel, Thomas, 70190, Stuttgart (DE)

(57) **Zusammenfassung**

Verfahren und Vorrichtung zum Implementieren und Ausführen einer hardwaremäßig ausgeführten Control Flow Checking Fehlererkennung im Arbeitsspeicher bzw. Instruktionsspeicher (2) einer Mikroprozessorumgebung, wobei die Programmanweisungen eines Programmabschnitts zwischen zwei Sprunganweisungen parallel zur CPU (7) in eine Elektronik eingelesen werden, wo über die Anweisungen eine Signatur erstellt und diese mit einer zuvor in einem Signaturspeicher (11) abgelegten Referenzsignatur auf Übereinstimmung verglichen wird, und hierdurch keine Rechenleistung von der CPU abverlangt, sowie keine zusätzlichen Programmzyklen ausgeführt werden müssen.

## Beschreibung

Die Erfindung betrifft eine Vorrichtung und Verfahren zum Erkennen von Datenlesefehlern in elektronischen Speicherbausteinen, die in eine Mikroprozessorumgebung als Arbeitsspeicher bzw. Instruktionsspeicher integriert sind. Mit Speicherbausteinen sind im Folgenden die integrierten elektronischen Schaltungen gemeint, die zur Speicherung von Daten geeignet sind und sowohl in einem eigenen Chipgehäuse, wie auch als Teil einer komplexeren integrierten Chiparchitektur realisiert sind.

Bekannt sind bei mikroprozessorgesteuerten elektronischen Systemen mit Speicherbausteinen Fehlererkennungs-Verfahren, die ein Parity-Bit verwenden, d. h einem Datensatz aus beispielsweise 7 oder 8 Bit wird ein Extrabit hinzugefügt, und zwar so, dass die Summe der Bits gerade wird. Das erlaubt die Überprüfung auf Fehler, jedoch keine Korrektur, da keine Information vorliegt, welches Bit falsch war - denn die so genannte Redundanz ist zu gering. Bei Doppelfehlern an zwei Bits eines Datensatzes, bzw. eines Bytes, wird dadurch gar kein Fehler erkannt. Die Fortentwicklung dieses Prinzips hat verfeinerte Algorithmen hervorgebracht, mit deren Hilfe es möglich ist, nicht nur Fehler zu erkennen, sondern auch zu beheben. Fehlererkennende Kodes sind z. B BCD und bei fehlerkorrigierenden kennt man den Hamming-Kode. CRC - Cyclic Redundancy Check - ermöglicht die Überwachung des Speichers durch Prüfung des Dateninhalts des Speichers, wobei Rückschlüsse auf die Hardwarefehler möglich sind. Da jedoch diese Signaturen nicht echtzeitlich gebildet werden, können in der Regel keine transienten, also flüchtige Fehler erkannt werden. ECC (Error Correction Code) ist ein Verfahren, bei dem jeglichen Datensätzen ein Term beigefügt wird, mit dessen Hilfe Fehlererkennung und Korrektur möglich sind. Diese bekannten Fehlererkennungs- und Korrekturverfahren erzeugen eine zusätzliche Belastung an Rechenkapazität des Mikrocomputers und der Peripherie der Rechnerarchitektur, sowie einen erhöhten Speicherbedarf.

Wenn man ein Programm nach der gängigen Vorgehensweise symbolisch in Knoten und Kanten darstellt, wobei mit den Knoten Programmteile gemeint sind, in denen keine Sprünge stattfinden dürfen - keine Sprünge innerhalb, und keine in die Knoten und aus den Knoten heraus - dann wird beispielsweise mit Kanten der Programmablauf selbst abgebildet.

Ein so genannter Watchdog-Prozessor überwacht den Programmablauf, in dem er eine Signatur über den abgearbeiteten Programmcode erstellt, oder eine Signatur vom Prozessor bereit gestellt bekommt, und mit einer abgespeicherten Signatur vergleicht. Eine von Null abweichende Differenz zwischen den ermittelten und gespeicherten Signaturen bewirkt eine Fehlermeldung. Die Signaturen werden durch Zuweisen einer Primzahl zu den einzelnen Programm-Knoten oder aus den Befehlen des Knotens per Modulo-2 Addition, einer Checksumme, oder per LSFR (Linear Feedback Shift Register) ermittelt. Wenn die Signatur willkürlich einem Programm-Knoten zugewiesen wird, nennt man das zugehörige Verfahren Assigned Signature Control Flow Checking, und nach einem bekannten Derived Signature Control Flow Checking Verfahren wird die Signatur mit Hilfe der Befehle gebildet. Nach Assigned Signature Checking Verfahren wird lediglich überprüft, ob die Knoten in einer erlaubten Reihenfolge abgearbeitet werden, und es kann nicht festgestellt werden, ob bei Verzweigungen in die richtige Verzweigung gesprungen wurde, und innerhalb eines Knotens erhält man keine Sicherheit darüber, ob alle Befehle richtig ausgeführt werden. Dagegen werden bei Derived Signature Checking Verfahren die Reihenfolge und die Ausführung der Befehle im Knoten überprüft, wobei festgestellt werden kann, ob alle Befehle ausgeführt werden. Diese Verfahren erzeugen einen Overhead, d. h eine zusätzliche Belastung des Speichers zwischen 10 und 20% bei einer typischen Blockgröße von 4 bis 10 Operationen, und der zusätzliche Logikaufwand für die CPU liegt auch bei 10-20% für einen 32-Bit Prozessor.

CFC, Control Flow Checking, ist ein bekanntes Fehlererkennungsverfahren, bei dem die Bitwerte in Datenpaketen transferiert werden. Der Sender produziert einen CRC-Wert und fügt ihn zu dem Datenpaket hinzu. Der Empfänger berechnet aus dem erhaltenen Teildatenpaket den CRC-Wert und vergleicht ihn mit dem zugeschickten Referenz-CRC-Wert. Bei Ungleichheit wird ein Fehler erkannt, was nicht bedeutet, dass bei Gleichheit keine Fehler vorliegen, nur ist die Wahrscheinlichkeit, dass gleich zwei Bits falsch sind, wesentlich geringer. Bei bekannten Rechnerarchitekturen wird das CFC-Verfahren nur zum Entdecken von Datentransferfehlern im Prozessor eingesetzt, während sich zum Überwachen des Speichers ein Verfahren etabliert hat, von über den Dateninhalt des Speichers gebildeten CRC-Werten auf die fehlerhaften Speicherzellen zu schließen. Ein bekannter standardisierter Elektronikbaustein unter der Bezeichnung MISR, d. h Multiple Input Signature Register, ist speziell mit der Funktion ausgestattet, über ganze Programmabschnitte zwischen zwei Sprungbefehlen, Knoten im oben beschriebenen Verständnis genannt, CRC-ähnliche Signaturen zu erstellen, wobei mitunter auch einige Arten von Doppelfehlern erkannt werden, und bei jedem nachfolgenden Befehl des Programmabschnitts die bis dahin erzeugte Signatur sich verändert, und somit eine Art summierte Signatur über einen Programmknoten erstellt wird, die in einem, beispielsweise 16-Bit Wert abgebildet wird.

Ein weiteres bekanntes Bitsicherungsverfahren ist durch Erhöhung der Hamming-Distanz zu erreichen. Die Hamming-Distanz zweier Binärzahlen ist die Anzahl der Bits, in denen sie sich unterscheiden. Bei einer Hamming-Distanz von 1 würde ein Bitfehler in dem unterschiedlichen Bit bereits zur Gleichheit der beiden Werte führen und somit zu einem unerkennbaren Fehler. Je höher die Hamming-Distanz, um so unwahrscheinlicher wird das Auftreten einer solchen Gleichheit zweier Binärzahlen aufgrund von Hardwarefehlern. Nachteilig ist, dass die durch höhere Hamming-Distanzen dazwischen liegenden Binärmuster als nicht genutzt verloren gehen müssen.

Derart gesicherte Mikroprozessorsysteme sind in allen sicherheitsrelevanten Anwendungsfällen von Nöten. Es können mikroprozessorgesteuerte Systeme in Fahrzeugen, Flugzeugen oder in der Raumfahrt sein, die z. B Antiblockiersysteme, Airbags oder EPS-Systeme etc steuern.

Die Aufgabe der vorliegenden Erfindung ist es, eine Vorrichtung vorzuschlagen, mit deren Hilfe ein hardwaremäßiges CFC-Verfahren ermöglicht wird, das in der Lage ist, die Prüfsignaturen online, in Echtzeit zu erzeugen und diese zur Überprüfung der Fehlerfreiheit neben dem Prozessor auch auf den Speicher anzuwenden, und hierbei keinen zusätzlichen Hardware-Aufwand, d. h Rechenaufwand für die CPU, zu erzeugen. Zusätzlich soll ermöglicht werden, die Signaturen parallel auszulesen, so dass keine zusätzlichen Softwarebefehle nötig sind, die Rechenkapazität gebrauchen, und das CFC-Verfahren, bzw. die Vorrichtung, nicht durch das Anwenderprogramm getriggert werden muss, und hierdurch die im Markt vorhandenen Programmanwendungen nicht geändert werden müssen. Außerdem soll die Lösung im Gesamtzusammenhang gesehen werden und sich ergebenden Sicherheitslücken und technische Folgeprobleme durch geeignete zusätzlichen Maßnahmen gelöst werden.

Die vorgeschlagene erfindungsgemäße Lösung beinhaltet in einer vorteilhaften Ausführung eine elektronische Schaltung, die als Control Flow Checking Einheit funktioniert und das CFC-Verfahren hardwaremäßig umsetzt. Diese elektronische CFC-Einheit ist in eine Mikroprozessorarchitektur integriert, und verarbeitet die über einen Instruktions-Bus von einem Instruktions-Speicher ankommenden Befehle in einem internen Multiple Input Signature Register MISR, welches eine CRC-Signatur über die ausgeführten Befehle eines Programmabschnitts zwischen zwei Sprungbefehlen erstellt. Die Befehle werden zeitgleich und parallel über den Instruktions-Bus von der CPU, wo sie zur Ausführung in dem Befehlsdecoder kommen, und von der CFC-Einheit in ihrem internen MISR gelesen. Beim Auftreten eines Sprungbefehls in dem Programm-Kode gibt der Befehlsinterpreter der CPU ein Steuersignal aus, das in einer vorteilhaften Ausführung der Erfindung als Triggersignal für den Signaturenvergleich benutzt wird. Die in dem MISR der CFC-Einheit zuletzt erstellte Live-Signatur wird mit der Referenzsignatur aus dem Signaturspeicher in dem Komparator der CFC-Einheit verglichen. Die Referenzsignaturen mit zu ihnen gehörenden Sprungadressen sind zuvor, beispielsweise in einem Offline-Prozess, als ein fester Datensatz in den Signaturspeicher geschrieben worden. Ebenso mit einer festen Adresszuordnung wird auch der Programmcode in den Instruktionsspeicher geschrieben. Der Signaturspeicher und der Instruktionsspeicher müssen somit als nichtflüchtige Speicher ausgeführt werden, z. B als ROM oder Flash, und wenn sie für Updates beschreibbar sein müssen, dann als wiederbeschreibbare Speicher. Eine Alternative wäre noch, die beiden Speicher als flüchtigen Speicher, als RAM, auszuführen, und diese dann beim Hochfahren des Systems aus einem nichtflüchtigen Speicher mit dem Programm und dem Signaturenwerk zu beladen.

Der Befehlsdecoder der CPU veranlasst somit, ausgelöst durch die dekodierten Sprungbefehle, die elektronische CFC-Einheit mit dem Signal Jump Execution den Signaturenvergleich auszuführen und dient somit als Trigger für das angewendete CFC-Verfahren nach vorliegender Erfindung.

Beim Auftreten von Programmunterbrechungen, den Interrupts, wird die aktuelle Signatur im MISR der CFC-Einheit, angesteuert durch ein Interrupt Excution Signal der CPU gesichert und nach der Rückkehr aus der Interrupt Service Routine, ISR, von dort ausgelesen. Wenn zusätzlich in der CFC-Einheit ein Signatur-Stack implementiert wird, der sich an MISR anschließt, dann lassen sich in ihm verschachtelte Interrupts mit deren gesicherten Knoten-Signaturen zwischenspeichern und danach wieder nacheinander in den MISR auslesen. In den Stack-Speicher sind die Signaturen beim Auftreten verschachtelter ISR's nacheinander hinein geschoben worden, und werden in umgekehrter Reihenfolge nach dem Prinzip First-In-Last-Out ausgelesen - genau passend um die verschachtelten ISR's nacheinander nach einem Rücksprung abzuschließen.

Um die ISR- und Sprung-Ereignisse durch die CFC-Einheit erkennen und verarbeiten zu lassen werden dieser in einer vorteilhaften Ausführung drei Steuersignale von der CPU zugeführt: Interrupt Execution, Jump Execution, und Return from Interrupt, wodurch mitunter auch Signaturen über Interrupt Service Routinen erstellt werden können. Die elektronische CFC-Einheit liefert nach dem Vergleich von zwei ungleichen Signaturen ein Fehlersignal, das beispielsweise zur Fehlerbehandlung weiter benutzt werden kann.

Eine zutreffende Knoten-Signatur aus dem Signaturspeicher des erfindungsgemäßen Mikroprozessorsystems wird auf vorteilhafte Weise in einer Ausführung durch ein so genanntes Bus-Snooping Verfahren über der Instruktionsadresse ausgewählt, die eigentlich für den Programmzähler, PZ, bzw. PC Programm Counter, und den Instruktionsspeicher gilt. Beim Bus-Snooping lesen mehrere Busteilnehmer die Adressierungen aller Teilnehmer mit und überprüfen ihre Caches, ob eine Cache-Line mit dieser Adresse vorhanden ist, d. h Anweisungen, die mit der betreffenden Adresse verknüpft sind. Hierzu haben solche Busteilnehmer einen Cache-Controller mit einer erweiterten Snoop-Logik integriert. In der Regel verweilen alle Busteilnehmer im Snooping-Zustand, bis auf den Teilnehmer, der die Transaktion auf dem Bus ausführt - dieser ist hier der Programmzähler der CPU.

In einer vorteilhaften Ausführung der Erfindung wird anstelle des Bus-Snooping eine vereinfachte Lösung zur Auswahl einer Referenzsignatur angeboten. Der Signaturspeicher, wenn er über einen Decoder mit einer reduzierten Adresse angesprochen wird, gibt die zu einer in ihm gespeicherten Sprungadresse zugehörige Signatur an die CFC-Einheit aus, wo sie mit der online im MISR ermittelten Signatur verglichen wird. Alternativ kann die CFC-Einheit selbst mittels eines Read Memory Signals die Ausgabe der Signatur auf den Signatur-Datenbus anregen. Diese Art der Triggerung des Signaturspeichers ist aber nicht zwingend erforderlich.

Damit der Signaturspeicher nicht gleich groß und damit aufwändig wie der Instruktions-speicher werden muss, wird seine Adresstiefe reduziert, in dem der bereits erwähnte Decoder einen Adressbereich ausmaskiert, der den Sprungadressen systembedingt zugewiesen ist. Die Reservierung eines bestimmten Adressbereichs für die Sprungadressen ist eine systembedingte Voraussetzung und soll zuvor durch eine geeignete Konvention implementiert werden. Ein zum Adressdecoder alternativer Adressvergleicher erfüllt funktionell das Gleiche, kann aber flexibler programmiert werden, insbesondere in Bezug auf den reservierten Sprungadressenbereich kann eine größere Freiheit erreicht werden, bis hin zum vollständigen Verzicht auf eine Reservierung eines Adressbereichs für die Sprungadressen.

Da die Signaturen in einem MISR lediglich über die Befehlsfolge eines Programmabschnitts zwischen zwei Sprüngen erstellt und gesichert werden, bleiben dabei die möglichen folgeschweren Fehler in den Programmsprüngen selbst nicht abgesichert. Um diesem Problem in einer sicherheitsrelevanten Anwendung zu begegnen wird erfindungsgemäß zusätzlich vorgeschlagen, die Mnemonik der Sprungbefehle mit der Hamming-Distanz 2 oder größer voneinander zu trennen. Dann führt ein Bitfehler in der Befehlsmnemonik auf ein nicht existierendes, ungültiges Bitmuster, was als Fehler erkannt und gehandhabt werden kann.

Die Erfindung wird im folgenden anhand eines Ausführungsbeispiels näher erläutert. Gleiche oder gleich wirkende Teile sind mit gleichen Bezugszeichen versehen. Es zeigen:
- Figur 1: eine erfindungsgemäße Mikroprozessorarchitektur mit einer parallel zur CPU angeschlossenen elektronischen Control Flow Checking Hardware-Einheit;
- Figur 2: den inneren Aufbau der erfindungsgemäßen elektronischen Control Flow Checking Einheit mit einer logischen CFC-Steuereinheit und einem MISR;
- Figur 3: eine Beispielschaltung eines reduzierenden Adressdecoders mit 3 Adressleitungen, und
- Figur 4: einen funktionellen erfindungsgemäßen Aufbau eines reduzierenden Adressdecoders als einen elektronischen Adressvergleicher.

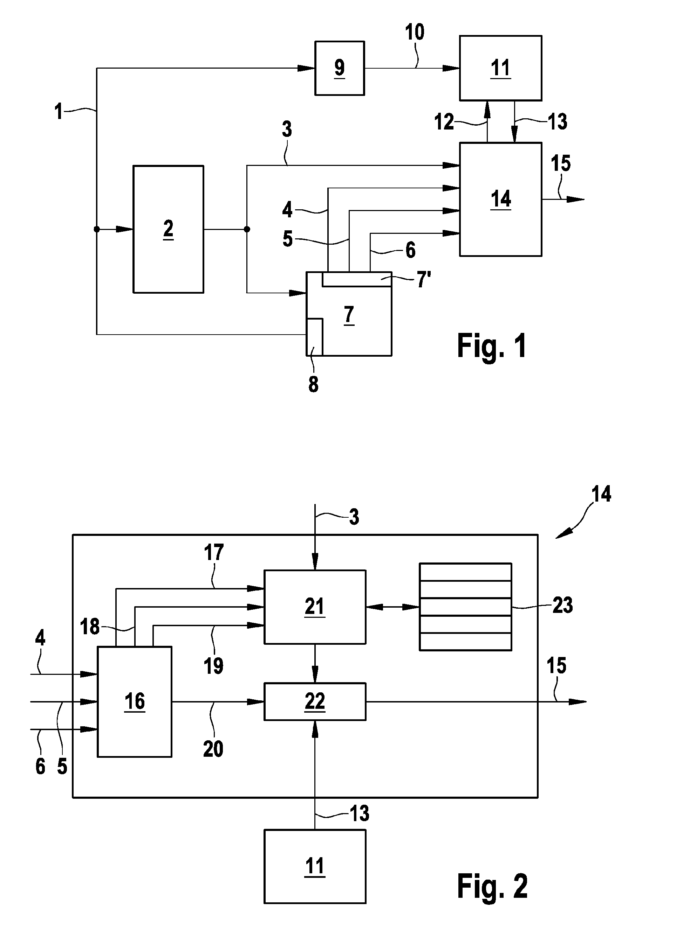

Die Figur 1 zeigt eine Mikroprozessorarchitektur, mit der in dieser integrierten erfindungsgemäßen elektronischen CFC-Einheit 14, sowie einem externen Signaturspeicher 11, der über einen Decoder 9 an einen System-Adressbus 1 angeschlossen ist.

Die CPU 7 und die CFC-Einheit 14 sind parallel an einem Instruktionsbus 3 angeschlossen und lesen beide zeitgleich den aus einem Instruktionsspeicher 2 ausgegebenen Programmcode, der seinerseits durch den Programmzähler 8 der CPU 7 über System-Adressbus 1 angesprochen worden ist. In der CFC-Einheit 14 wird online eine Signatur über einen Programmabschnitt gebildet, vorzugsweise über einen Programmabschnitt zwischen zwei Programmsprüngen. Die CPU 7 erzeugt intern durch ihren Befehlsinterpreter 7' bei erkannten Programmsprüngen ein Jump Execution Signal 4, das zur CFC-Einheit 14 gelangt und in dieser einen Vergleich der bis dahin online erzeugten und abgeschlossenen Signatur mit einer vorher abgespeicherten Referenz-Signatur aus dem Signaturspeicher 11 auslöst. Die passende Referenz-Signatur wird aus dem Signaturspeicher durch einen Decoder 9 ausgewählt, der durch Bus-Snooping alle Adressierungen an dem System-Adressbus 1 mitliest, und die Sprungadressen durch Reduzierung ausselektiert. Der Signaturspeicher ist somit durch den Decoder angesteuert und in der Lage, eine Signatur an seinem Ausgang auszugeben. Für einige Systemkonstellationen kann es von Nöten sein, den Signaturspeicher 11 hierzu mit einem speziellen Signal anzusteuern, das als Memory Read 12 eingezeichnet ist, und in der CFC-Einheit bereit gestellt würde.

Die CPU liefert weitere zwei Steuersignale zur Steuerung der CFC-Einheit 14, eine Interrupt Execution 5 und ein Return from Interrupt 6. Beide Steuersignale dienen der Handhabung der Interrupt Service Routinen, den ISR's, die in der CFC-Einheit eine Zwischenspeicherung der Sprung- und Rücksprungadressen mit Signaturen erfahren. Die CFC-Einheit liefert im Falle eines fehlerhaften Signaturenvergleichs ein Fehlersignal 15.

Die Figur 2 zeigt einen vorteilhaften inneren Aufbau der CFC-Einheit 14, die eine CFC-Steuereinheit 16 enthält. Diese CFC-Steuereinheit erhält von außen zugeführte Steuersignale Jump Execution 4, Interrupt Execution 5, und Return from Interrupt 6 und produziert in ihrer internen Logik daraus ihrerseits die Steuersignale Signatur auslesen 17, Signatur ablegen 18, Reset 19 und ein Triggersignal 20, mit dem der Komparator 22 angesteuert wird. Ein zusätzliches Steuersignal Memory Read 12, das in Figur 1 eingezeichnet ist, wird in dieser Ausführung der CFC-Einheit nicht bereit gestellt.

Die Befehle gelangen über den Instruktionsbus 3 zu einem in der CFC-Einheit implementierten MISR 21, dessen definierte Eigenschaften ihn befähigen, eine Knoten-Signatur über alle nacheinander ankommenden Befehle eines Programmabschnitts zu erstellen und diese beispielsweise in einem 16-Bit CRC-Wert abzubilden. Diesen Prozess der Ergänzung der Signatur führt der MISR solange aus, bis er einen Sprungbefehl erkennt, wodurch die Bildung der Signatur abgeschlossen ist und sie am Ausgang zum Komparator 22 ausgegeben wird. Wenn dies passiert, wird gleichzeitig ein Sprungbefehl auch in dem Befehlsdecoder der CPU 7 erkannt, die das Steuersignal Jump Execution 4 an die CFC-Steuereinheit 16 gesendet hatte, wodurch diese ein Triggersignal 20 für den Komparator 22 ausgab. Zu diesem Zeitpunkt liegt eine passend ausgewählte Referenzsignatur aus dem Signaturspeicher 11 an dem Datenbus für die Signaturenausgabe 13 an, wodurch ein Vergleich in dem Komparator 22 ausgeführt werden kann. Abhängig vom Ergebnis des Vergleichs kann der Komparator ein Fehlersignal 15 ausgeben.

Um auch für Programmunterbrechungen, die ISR's, gewappnet zu sein, ist in der CFC-Einheit ein Signatur-Stack 23 implementiert, der sich an den MISR 21 anschließt. Beim Auftreten verschachtelter ISR's steuert die CFC-Steuereinheit 16 mit ihren Steuersignalen Signatur auslesen 17 und Signatur ablegen 18 das Zwischenspeichern und spätere Auslesen der Signaturen auf dem Signatur-Stack 23, die über die ISR's gebildet werden. Das Reset Signal 19 wird ausgeführt, um den MISR zu in den Grundzustand zu versetzen, wie es für elektronische Baugruppen üblich ist.

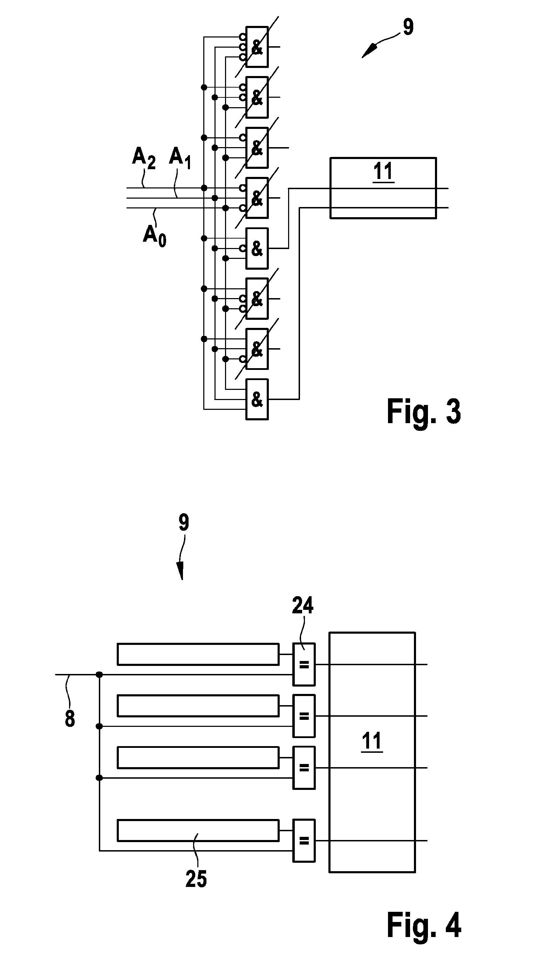

In Figur 3 ist eine beispielhafte, fest verdrahtete Ausführung eines reduzierenden Decoders gezeigt, bei der aber die Adressbits A0, A1 und A2, die normalerweise acht Ausgänge über logische Operatoren anwählen könnten, auf nur zwei Ausgänge, den fünften und achten, beschränkt sind. Bei einem 32-Bit Adressbus kann nach diesem Prinzip beispielsweise ein auf 8-Bit Adresstiefe reduzierter Adressbereich ausmaskiert werden, was dem in Figur 1 gezeigten Adressbus 10 entspricht. Diese Anordnung setzt voraus, dass es eine systembedingte Konvention darüber gibt, für alle Sprungadressen einen bestimmten, reservierten Adressbereich zu vereinbaren. Der reduzierende Decoder adressiert dann mit seiner fest vorgegebenen Logik genau diesen reservierten Adressbereich und benötigt deshalb nur einen Teil der Adressleitungen.

Die Figur 4 zeigt einen anderen, flexibel umprogrammierbaren 'reduzierenden Decoder' 9, der hier eigentlich ein Adress-Komparator ist. Dabei wird die aktuelle Adresse aus dem Programmzähler 8 mit den zuvor explizit in einer der Speicherzellen 25 der elektronischen Vergleichseinheiten 24 als Datensätze abgelegten vollständigen Sprung-Adressen, Adresse CRC1 ... bis Adresse CRCn, aller Signaturen verglichen. Dies geschieht parallel und gleichzeitig. Bei der durch einen zutreffenden Vergleich in einer der elektronischen Vergleichseinheiten 24 festgestellten Übereinstimmung wird die an diese Adresse angehängte, abgespeicherte Knoten-Signatur ausgewählt und aus dem Signaturspeicher 11 an die CFC-Einheit 14 an dem Datenbus für die Signaturen 13 ausgegeben.

Diese Art der erfindungsgemäßen Adresszuordnung macht es erforderlich, dass die Anzahl der Komparatoren, der Vergleicheinheiten 24, für alle Sprungadressen der Anwendung ausreicht, und diese vorzugsweise als elektronische Hardware ausgeführt werden, um eine Zeitgleichheit der Datenverarbeitung zu gewährleisten. Die Speicherzellen 25 können in dem Signaturspeicher liegen, oder aber auch in den Vergleichseinheiten 24 implementiert werden. Die Adressen der Sprungbefehle müssen in dieser Konstellation nicht mehr per Konvention in einem reservierten Adressbereich liegen, wodurch das System flexibler wird und den Speicher ohne verschwendete leere, reservierte Speicherzellen effektiver nutzen kann.

Die dazugehörende Logik, die für eine vorherige Abspeicherung der Sprungadressen als Datensätze mit zu ihnen gehörenden, über sie gebildeten Programmabschnitts- oder Knoten-Signaturen im Signaturspeicher 11 sorgt, ist nicht näher im Detail abgebildet. Sie ist auf vielfältige Weise durch bekannte Techniken zu implementieren, so dass sie die beschriebene Funktionalität erfüllt. Beispielsweise kann der Signaturspeicher 11 offline mit einem vorher erzeugten Datenmuster beschrieben werden, das zum Programm im Instruktionsspeicher 2 passend erzeugt worden ist. Der Signaturspeicher ist vorzugsweise als ein nichtflüchtiger Speicher, als ein ROM, EPROM oder Flash ausgeführt, das für das erfindungsgemäße Mikroprozessorsystem einen lebenslangen unveränderten Inhalt hat. Bei einem Update des Programms im Instruktionsspeicher muss daher auch der Signaturspeicher ebenso ein passendes Update erfahren. Flexiblere Formen sind ebenso denkbar.

Mit der vorliegenden Erfindung lassen sich transiente und permanente Fehler erkennen und Speicher ohne eigene Sicherungsmechanismen kontrollieren und sichern. Die Sicherung erfolgt ohne zusätzliche Programmbefehle, und ohne Leistungseinbußen des Mikroprozessors durch die CFC-Einheit, und Programmabschnitte ohne Programmsprünge sind hochgradig gesichert.

## Patentansprüche

1. Verfahren zum Fehlererkennen von Datenlese- und Speicherfehlern in einer Mikroprozessorumgebung mittels Control Flow Checking, bei dem parallel und synchron zum Befehlsdecoder der CPU (7) die Befehlsanweisungen eingelesen, und über Programmabschnitte online Signaturen gebildet, diese mit Referenzsignaturen verglichen werden, und bei Ungleichheit ein Fehlersignal erzeugt wird.

2. Verfahren nach Anspruch 1, mit mindestens einem Mikroprozessor und einem Instruktionsspeicher, bei dem ein Control Flow Check online und in Echtzeit in einer parallel an den Instruktionsbus (3) angeschlossenen elektronischen Einheit (14) ausgeführt wird, in der ein Vergleich der online erstellten Signaturen mit Referenzsignaturen erfolgt, und die Signaturen als CRC-Signaturen gebildet sind.

3. Verfahren nach Anspruch 1 oder 2, bei dem die Auswahl der Sprungadressen und ihren Referenzsignaturen aus dem Signaturspeicher durch einen auf einem Adressbus (1) mittels Bus-Snooping-Verfahrens angeschlossenen Adressdecoder (9) erfolgt, und der Adressdecoder (9) dabei einen für Sprungadressen bestimmten Adressbereich durch Fortlassen von Ausgangsleitungen ausselektiert.

4. Verfahren nach einem der vorstehenden Ansprüche, mit mindestens einem Mikroprozessor (7) und einem Instruktionsspeicher (2), bei dem die Triggerung des Signaturenvergleichs durch die im Befehlsdecoder (9) dekodierten Sprunganweisungen erkannt und ausgelöst wird.

5. Verfahren nach einem der vorhergehenden Ansprüche, bei dem zusätzlich alle Sprungbefehle durch binäre Muster gebildet sind, die voneinander eine Hamming-Distanz von mindestens 2 aufweisen.

6. Vorrichtung zum Erkennen von Speicherfehlern mittels Control Flow Checking, welche schaltungselektronisch ausgeführt und parallel zu einer CPU (7) an einen Instruktionsbus (3) angeschlossen ist, und die durch drei CPU-Steuersignale Jump Execution (4), Interrupt Execution (5), und Return from Interrupt (6) gesteuert wird, ein internes Signaturregister (21) aufweist, und einen Komparator (22) umfasst, der die Signaturen aus dem Signaturregister (21) mit Referenzsignaturen vergleicht und ein Fehlersignal (15) erzeugen kann.

7. Vorrichtung nach Anspruch 6, bei welcher ein Signaturspeicher (11) für die Referenzsignaturen als ein separater, externer Speicher ausgeführt ist.

8. Vorrichtung nach Anspruch 6 oder 7, bei welcher eine logische CFC-Steuereinheit (16) vorgesehen ist, die mit drei externen Steuersignalen Jump Execution (4), Interrupt Execution (5), und Return from Interrupt (6) angesteuert wird, und die aus diesen Signalen Steuersignale für das Signaturregister (21) und ein Triggersignal für den Komparator (22) generiert.

9. Vorrichtung nach einem der Ansprüche 6 bis 8, bei welcher an dem internen Signaturregister (16) ein spezieller zusätzlicher Speicher, ein Signatur-Stack (23), angeschlossen ist, der als ein Stack zum Zwischenspeichern von Signaturen verschachtelter Programmaufrufe ausgeführt ist.

10. Vorrichtung nach einem der Ansprüche 6 bis 9, bei welcher die Referenzsignaturen in einem Signaturspeicher (11) abgelegt sind, und dieser durch einen Decoder (9) angesprochen wird, der einen reduzierten Adressbereich ausselektiert.

11. Vorrichtung nach einem der Ansprüche 6 bis 10, bei welcher der Decoder (9) eine Mehrzahl von elektronischen Vergleichseinheiten (24) aufweist, die parallel an den Adressbus (3) angeschlossen sind, und jede über einen zugewiesenen Speicherplatz (25) verfügt, in dem je eine vollständige Sprungadresse festgehalten wird, und jede Vergleichseinheit (24) mit der zur gespeicherten Adresse gehörenden Programmabschnitts-Signatur im Signaturspeicher (11) verknüpft ist, und diese bei Gleichheitssignal einer der Vergleichseinheiten (24) ausgewählt wird.
